# EUROPÄISCHE PATENTANMELDUNG

(11) **EP 0 624 316 A1**
(43) Veröffentlichungstag der Anmeldung: **17.11.1994**
(21) Anmeldenummer: 94102516.5
(22) Anmeldetag: 19.02.1994
(51) Int. Cl.: A21C 5/00, A21C 9/08

(54) **Verfahren und Vorrichtung zur Verringerung von Mehlstaub bei kombinierten Teigteil-und Rundwirkmaschinen**

(30) Priorität: 14.05.1993 DE 4316218
(71) Anmelder: Werner & Pfleiderer GmbH, D-70469 Stuttgart (DE)
(72) Erfinder: Gostner, Helmut, D-70327 Stuttgart (DE)

(57) **Zusammenfassung**

Es wird ein Verfahren und eine Vorrichtung offenbart, welche einen nahezu staubfreien Betrieb einer mit einem Mehlstreuer ausgerüsteten kombinierten Teigteil-und Rundwirkmaschine ermöglichen.
Erreicht wird dies dadurch, dass auf den vorlaufenden Bändern (2 und 3) die Bemehlungstärke über eine einstellbare Absaugung reguliert und unmittelbar nach einer Umlenkung der endlosen Bänder das anhaftende Restmehl von den rücklaufenden (unteren) Bändern abgesaugt wird.

## Beschreibung

Die Erfindung betrifft ein Verfahren zur Verringerung Von Mehlstaub in Bäckereien bei der Teigaufbereitung mittels bekannter kombinierter Teigteil-und Rundwirkmaschinen sowie eine Vorrichtung zur Durchführung des Verfahrens.

Zur Herstellung von Brötchen und Kleinbrot ist der Einsatz von kombinierten Teigteil-und Rundwirkmaschinen hinreichend bekannt. Aus einem Teigtrichter wird dabei der Teig über einen Förderkolben einer Drehschiebermesseinheit zugeführt. Die hierbei abgeteilten Teigstücke werden einem Trommelrundwirker, der teilweise von einem Wirkband umschlungen ist übergeben. Die gewirkten Teiglinge werden vom Wirkband an Spreizbändern bzw. einem Breitband zum Abtransport überführt. Über einen Mehlstreuer wird das Wirkband bzw. die Wirktrommel bemehlt, um ein Kleben der Teigstücke zu vermeiden.

Diese notwendige Bemehlung, die in Abhängigkeit der Teigart mehr oder weniger stark vorgenommen werden muss, verursacht zwangsläufig eine unerwünschte Mehlstaubentwicklung in der Backstube und in der Maschine sowie einen relativ hohen Mehlverlust an den Umlenkstellen der Bänder.

Aus der DE 33 19 908 C2 ist es zwar bekannt beim Beschicken von Teigmischmaschinen mit Mehl eine Absaugung an der Mehlzufuhrleitung anzubringen, um eine Mehlstaubentwicklung weitgehend zu vermeiden. Diese aufgezeigte Lehre ist bei kombinierten Teigteil-und Rundwirkmaschinen wegen der umlaufenden Bänder, die mehr oder weniger stark bemehlt sein müssen nicht einsetzbar.

Der Erfindung liegt die Aufgabe zugrunde, bei einer kombinierten Teigteil-und Rundwirkmaschine die Mehlstaubentwicklung weitgehend zu vermeiden.

Erfindungsgemäss wird diese Aufgabe bei einem Verfahren durch die Merkmale des Anspruches 1 gelöst, also dadurch, dass überschüssiges Streumehl auf den vorlaufenden Bändern über eine regulierbare Absaugung entfernt und unmittelbar nach einer Umlenkung der endlosen Bänder das Restmehl von den rücklaufenden Bändern abgesaugt wird.
Bei einer Vorrichtung wird die Aufgabe durch die Merkmale des Anspruchs 4 gelöst, also dadurch, dass die Saugvorrichtung als nach Massgabe der Bandbreite ausgebildeter pelikanartiger Saugschnabel besteht, der zumindest an der Schnabelspitze mit einem Saugschlitz versehen ist.

Durch das erfindungsgemässe Verfahren und die dazugehörige Saugvorrichtung wird sichergestellt, dass eine Mehlstaubentwicklung trotz notwendiger Bemehlung des Wirkbandes und/oder der Wirktrommel weitgehend in der Maschine und in der Backstube vermieden wird.

Mehlverluste werden durch Rückführung des abgesaugten Mehles zum Mehlstreuer erheblich reduziert.

Der mehlstaubfreie Betrieb der Teigteil-und Rundwirkmaschine kommt nicht nur dem Personal zugute, sondern der feine Mehlstaub ist auch schädlich für Steuerteile an Maschinen und Backöfen. Bevorzugte Ausführungsformen der Erfindung sind in den Unteransprüchen beschrieben.

Im folgenden wird anhand der beiliegenden Zeichnung ein Ausführungsbeispiel der Erfindung näher beschrieben.
Es zeigt:
- Fig. 1: eine schematische Seitenansicht einer Teigteil-und Rundwirkmaschine mit Mehlabsaugung
- Fig. 2: eine vergrösserte Darstellung eines Saugschnabels an der Übergabestelle zwischen Wirkband und Spreizbänder
- Fig. 3: eine perspektivische Darstellung eines pelikanförmigen Saugschnabels
- Fig. 4: Schnabeloberteil 52 mit Abdeckblech 59 als Einzelheit im Schnitt
Vollautomatische kombinierte Teigteil-und Rundwirkmaschinen wie in Fig. 1 gezeigt sind seit langem in handwerklichen als auch industriellen Backbetrieben eingesetzt.

Die wesentlichen Bestandteile für die Teigteilung sind dabei ein Teigtrichter 11, aus welchem der Teig über einer Förderkammer 12 einer mehrreihigen Drehschiebermesseinheit 13 zugeführt wird.

Die hierbei abgeteilten Teigstücke 8 werden durch Messkolben nach unten direkt in Kammern 91 eines Trommelwirkers 9 ausgestossen. Dieser ist teilweise von einem Wirkband 2 umschlossen. Vom Wirkband 2 werden die gewirkten Teiglinge 8' auf Spreizbänder 3 (oder Breitband) übergeben und zur Weiterverarbeitung transportiert Ein Mehlstreuer 4 versorgt das Wirkband 2 mit Mehl, um ein Kleben der Teigstücke 8 zu vermeiden. Der Mehlstreuer 4 kann, wenn die Platzverhältnisse es erlauben auch über dem Trommelwirker 9 angeordnet sein. Unabhängig vom Anordnungsort des Mehlstreuers 4, muss eine Bemehlung der beim Wirkvorgang mit den Teigstücken 8 in Berührung kommenden Flächen in Abhängigkeit der zu teilenden Teigart mehr oder weniger stark erfolgen. Bei der Umlenkung des Wirkbandes 2 an der Umlenkrolle 21 fällt der grösste Teil des überschüssigen Mehles 41 vom Wirkband 2 auf die darunter angeordneten Spreizbänder 3. Ein gewisser am Wirkband 2 haftender Anteil von Restmehl fällt auf der Strecke zwischen Umlenkrolle 21 und Spanrolle 24 vom rücklaufenden Wirkband 2 ab und verstaubt den Innenraum der ringsum verkleideten Teigteil-und Rundwirkmaschine 1. Das Wirkband 2 wird über die Antriebswalze 22 angetrieben.
Das auf den Spreizbändern 3 befindliche überschüssige Mehl fällt bei der Umlenkung an der Umlenkrolle 31 in die Backstube (oder eventuell einem Behälter) und das Restmehl fällt auf der Strecke zwischen Umlenkrolle 31 und Antriebsrolle 32 von den Spreizbändern 3 ab und verstaubt die Backstube.
Durch das erfindungsgemässe Verfahren wird eine kontrollierte Absaugung des überschüssigen Mehles und eine Absaugung des Restmehles von dem Wirkband 2 und den Spreizbändern 3 vorgenommen.

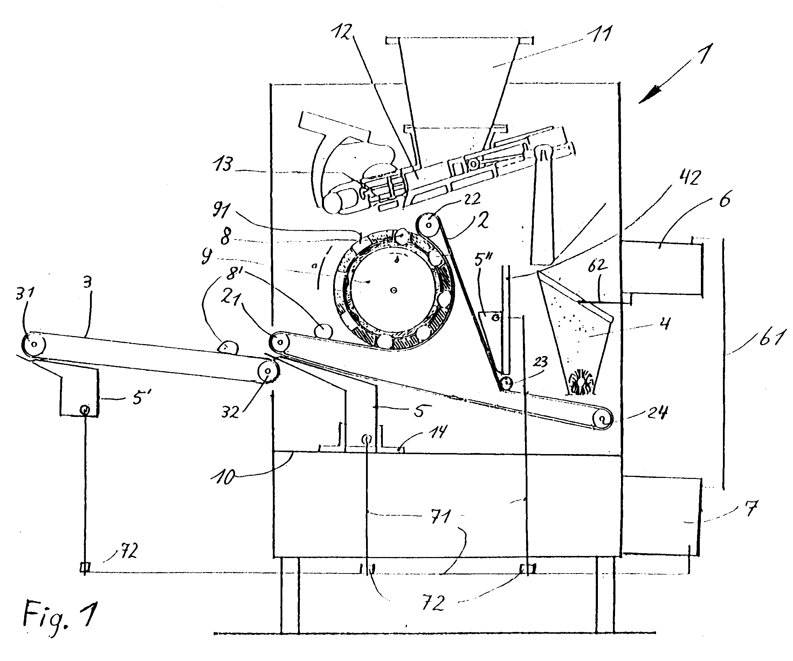

In der Fig. 1 sind drei Saugvorrichtungen, bestehend jeweils aus einem pelikanartigen Saugschnabel 5, der Teigteil-und Rundwirkmaschine 2 zugeordnet. Jeder Saugschnabel 5 ist über einen Anschlussstutzen 54, Leitung 71, Drosselventil 72 mit einer Vakuumpumpe 7 verbunden. Letztere ist über eine Leitung 61 mit einer Siebeinrichtung 6 verbunden. Von der Siebeinrichtung 6 ist eine Leitung 62 zum Mehlstreuer 4 geführt. Jeder Saugschnabel 5 ist nach Massgabe der Breite des Wirkbandes 2 bzw. der Spreizbänder 3 gestaltet und ist wenigstens mit einem Saugschlitz 55 an der Schnabelspitze ausgerüstet. Das Schnabelunterteil 51 ist dabei an der Schnabelspitze länger als das Schnabeloberteil 52 ausgebildet. Jeder Saugschnabel 5 ist horizontal und vertikal verstellbar befestigt. Der am Mehlabstreifer 42 befestigte Saugschnbel 5'' ist nur mit dem Saugschlitz 55 an der Schnabelspitze ausgerüstet. Die beiden anderen, dem Wirkband 2 und Spreizbändern 3 bzw. den Spreizbändern 3 zugeordneten Saugschnäbel 5 und 5' besitzen zusätzlich im Schnabeloberteil 52 mehrere Saugschlitze 56.

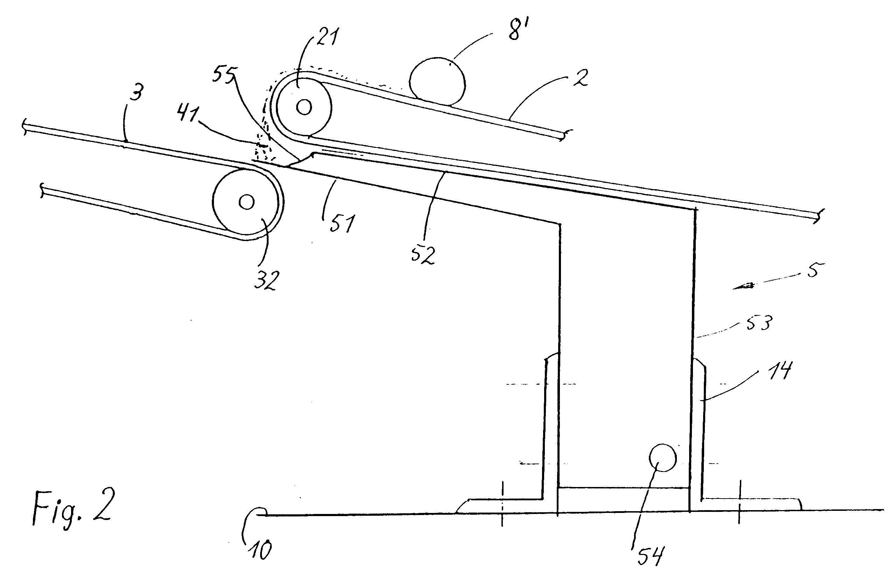

In Fig. 2 ist die verstellbare Befestigung des unterhalb dem Wirkband 2 angeordneten Saugschnabels 5 näher dargestellt. Über zwei Winkel 14, die mittels nicht näher gezeigter Langlöcher auf der Maschinengestellbodenplatte 10 angeschraubt sind, wird der Saugschnabel 5 mittels in den Seitenteilen 53 angeordneten Gewindebohrungen 57 höheneinstellbar zwischen den senkrechten Schenkeln der Winkel 14 angeschraubt. Hierfür besitzen die senkrechten Schenkel der Winkel 14 ebenfalls nicht näher gezeigte Langlöcher. Der Saugschnabel 5' für die Spreizbänder 3 ist auch einstellbar, z.B. am Gestell der Spreizbänder 3 angeschraubt. Nähere Einzelheiten hierzu sind in der Zeichnung nicht dargestellt.

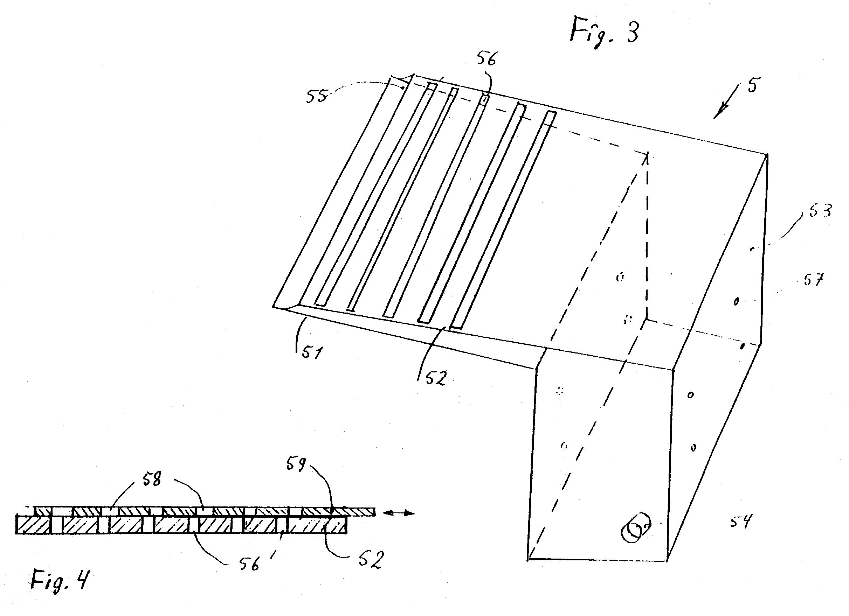

Das Schnabeloberteil 52 kann wie in Fig. 4 gezeigt ist mit einem verschiebbaren Abdeckblech 59 ausgerüstet sein. Im Abdeckblech 59 sind entsprechend den Abständen der Saugschlitze 56 Schlitze 58 von unterschiedlicher Breite eingebracht, so dass durch eine Verschiebung des Abdeckbleches 59 teilweise oder ganz ein Teil der Saugschlitze 56 im Schnabeloberteil 52 abgedeckt werden können.

In Fig. 4 sind die hinteren Saugschlitze 56 abgedeckt. Bei einer Verschiebung des Abdeckbleches 59 nach links werden alle Saugschlitze 56 geöffnet bzw. bei einer weiteren Verschiebung nach rechts werden die vorderen Saugschlitze 56 weiter bzw. ganz geschlossen. Das Abdeckblech 59 ist über nicht dargestellte Schrauben und Langlöcher am Schnabeloberteil 52 verschiebbar befestigt.
Die Wirkungsweise der Erfindung ist folgende:
Die Saugwirkung jedes Saugschnabels 5,5' und 5'' ist durch ihre verstellbare Befestigung und über die Drosselventile 72 einzel einstellbar. Nach der Bemehlung des Wirkbandes 2 über den Mehlstreuer 4 erfolgt an der Umlenkrolle 23 über den Mehlabstreifer 42 eine Abstreifung des überschüssigen Mehles, welches über den Saugschnabel 5'' abgesaugt wird. Mit dem auf dem Wirkband 2 verbleibenden Mehl wird ein Kleben der Teigstücke 8 beim Wirkvorgang vermieden. An der Umlenkrolle 21, der Übergabestelle der gewirkten Teiglinge 8' auf die Spreizbänder 3, fällt das Streumehl 41 vom Wirkband 2 auf die Spreizbänder 3 bzw. je nach Einstellung des Saugschnabels 5 mehr oder weniger auf das verlängerte Schnabelunterteil 51 der Schnabelspitze. Über den vorderen Saugschlitz 55 wird dabei das Streumehl 41 von der verlängerten Schnabelspitze abgesaugt. Über die Saugschlitze 56 wird gleichzeitig das noch anhaftende Restmehl vom rücklaufenden Wirkband 2 abgesaugt. Somit kann der Innenraum der Maschine nicht mit Mehl verstaubt werden.

Das auf den Spreizbändern 3 befindliche Mehl wird an der Umlenkrolle 31 über den Saugschnabel 5' über den vorderen Schaugschlitz 55 und den Saugschlitzen 56 vollkommen abgesaugt, so dass die Backstube praktisch durch die Teigteil-und Rundwirkmaschine nicht mit Mehlstaub verunreinigt wird.

Je nach gewünschter Bemehlung der Spreizbänder 3 kann durch eine horizontale Verschiebung der Winkel 14 auf der Bodenplatte 10 die Schnabelspitze unterschiedlich weit über die Spreizbänder 3 geschoben werden. Bei trockenen Teigen, bei denen eine Bemehlung der Spreizbänder nicht oder kaum erforderlich ist, wird der Saugschnabel 5 so weit in Richtung Spreizbänder 3 postiert, dass das vom Wirkband 2 herabfallende überschüssige Streumehl 41 vollkommen auf das untere verlängerte Schnabelteil 51 fällt und über den Saugschlitz 55 vollkommen abgesaugt wird. Bei der Teilung von feuchten Teigen erfolgt eine Verschiebung des Saugschnabels 5 nach rechts, so dass genügend Streumehl 41 auf die Spreizbänder 3 fällt, um ein Kleben der Teiglinge 8' mit diesen zu verhindern.

Falls der Mehlstreuer 4 direkt über der Wirktrommel 9 (z.B. bei anderen Maschinentypen) angeordnet ist, kann der Saugschnabel 5'' entfallen.

Bei der Teilung von trockenen Teigen, bei denen eine Bemehlung der Spreizbänder 3 nicht unbedingt erforderlich ist, kann auch die Saugvorrichtung 5' an der Umlenkrolle 31 abgestellt zumindest aber die Saugleistung für diese stark reduziert werden. Auf einfache Weise lässt sich dies durch eine Verschiebung des Abdeckbleches 59 realisieren. Durch die Rückführung des abgesaugten Mehles über die Siebeinrichtung 6 zum Mehlstreuer 4 tritt neben der Staubfreiheit auch kein Mehlverlust mehr bei den kombinierten Teigteil-und Rundwirkmaschinen auf.

## Patentansprüche

1. Verfahren zur Verringerung von Mehlstaub bei einer kombinierten Teigteil-und Rundwirkmaschine, bei der das Wirkband oder die Wirktrommel über einen Mehlstreuer bemehlt wird um ein Kleben der abgeteilten Teigstücke beim Wirken und beim Abtransport der gewirkten Teiglinge mittels Spreizbänder (oder Breitband) zu vermeiden, dadurch gekennzeichnet, dass auf den vorlaufenden Bändern (2 und 3) die Bemehlungsstärke über eine einstellbare Absaugung reguliert und unmittelbar nach einer Umlenkung der endlosen Bänder das anhaftende Restmehl von den rücklaufenden (unteren) Bändern abgesaugt wird.

2. Verfahren nach Anspruch 1, dadurch gekennzeichnet, dass an der Übergabestelle der Teiglinge (8') vom Wirkband (2) auf die Spreizbänder (3) die Absaugung des Restmehles vom Wirkband (2) und die Regulierung der Bemehlung auf den Spreizbändern (3) durch eine gemeinsame in der horizontalen und vertikalen einstellbaren Absaugvorrichtung erfolgt.

3. Verfahren nach Anspruch 1 und 2, dadurch gekennzeichnet, dass das abgesaugte Mehl über eine Siebeinrichtung (6) dem Mehlstreuer (4) wieder zugeführt wird.

4. Vorrichtung zur Durchführung des Verfahrens nach Anspruch 1, dadurch gekennzeichnet, dass die Absaugvorrichtung aus einem pelikanartigen Saugschnabel (5) besteht, der nach Massgabe der Breite des Wirkbandes (2) ausgebildet ist und wenigstens an der Schnabelspitze mit einem Saugschlitz (55) ausgerüstet ist.

5. Vorrichtung nach Anspruch 4, dadurch gekennzeichnet, dass das Schnabelunterteil (51) an der Schnabelspitze länger als das mit Saugschlitzen (56) versehene Schnabeloberteil (52) ausgebildet ist.

6. Vorrichtung nach wenigstens einem der Ansprüche 4 und 5, dadurch gekennzeichnet, dass der Saugschnabel (5) über Winkel (14) auf der Maschinengestellbodenplatte (10) horizontal und vertikal einstellbar so angeordnet ist, dass die verlängerte untere Schnabelspitze mit dem Saugschlitz (55) den Spreizbändern (3) und die Saugschlitze (56) dem unteren Wirkband (2) zugeordnet sind.

7. Vorrichtung nach wenigstens einem der Ansprüche 4 bis 6, dadurch gekennzeichnet, dass zur ganzen oder teilweisen Abdeckung der Saugschlitze (56) auf dem Schnabeloberteil (52) ein mit unterschiedlich breiten Schlitzen (58) ausgerüstetes Abdeckblech (59) verschiebbar angeordnet ist.

8. Vorrichtung nach Anspruch 4, dadurch gekennzeichnet, dass der Saugschnabel (5) über einen Anschlussstutzen 54 über eine Leitung (71) und Drosselventil (72) mit einer Vakuumpumpe (7) verbunden ist, die über eine Leitung (61) mit einer Siebeinrichtung (6) in Verbindung steht.
